(19) Europäisches Patentamt

European Patent Office

Office européen des brevets

(11) **EP 4 730 769 A1**

(12) **EUROPEAN PATENT APPLICATION**

(43) Date of publication:
22.04.2026 Bulletin 2026/17

(21) Application number: 24306751.9

(22) Date of filing: 21.10.2024

(51) International Patent Classification (IPC):
$H04N\ 19/105^{(2014.01)}$    $H04N\ 19/11^{(2014.01)}$
$H04N\ 19/117^{(2014.01)}$    $H04N\ 19/159^{(2014.01)}$
$H04N\ 19/167^{(2014.01)}$    $H04N\ 19/176^{(2014.01)}$
$H04N\ 19/182^{(2014.01)}$    $H04N\ 19/59^{(2014.01)}$
$H04N\ 19/593^{(2014.01)}$

(52) Cooperative Patent Classification (CPC):
H04N 19/105; H04N 19/11; H04N 19/117;
H04N 19/159; H04N 19/167; H04N 19/176;
H04N 19/182; H04N 19/59; H04N 19/593

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• RATH, Gagan Bihari
35000 RENNES (FR)
• FRANCOIS, Edouard
35890 BOURG DES COMPTES (FR)
• BORDES, Philippe
35890 LAILLE (FR)
• ROBERT, Antoine
35140 MEZIERES SUR COUESNON (FR)

(74) Representative: Vossius & Partner
Patentanwälte Rechtsanwälte mbB
Siebertstraße 3
81675 München (DE)

(54) **INTRA PREDICTION WITH SUBSAMPLING OF A PREDICTION GRID**

(57) Systems, methods, and instrumentalities for intra prediction with subsampling of a prediction grid. An example device may determine that a current block has a dimension size larger than a maximum dimension size. Based on the determination, the device may down-sample a prediction grid based on the dimension size. The device may determine prediction values for pixels in the down-sampled prediction grid. Based on the prediction values for the pixels in the down-sampled prediction grid, the device may linearly interpolate prediction values for pixels in a remainder of the prediction grid. The device may decode the current block based on the prediction values for the pixels in the down-sampled prediction grid and the linearly interpolated prediction values for the pixels in the remainder of the prediction grid.

FIG. 8

EP 4 730 769 A1

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for intra prediction with subsampling of a prediction grid. An example device may determine that a current block has a dimension size larger than a maximum dimension size. Based on the determination, the device may down-sample a prediction grid based on the dimension size. The device may determine prediction values for pixels in the down-sampled prediction grid. Based on the prediction values for the pixels in the down-sampled prediction grid, the device may linearly interpolate prediction values for pixels in a remainder of the prediction grid. The device may decode the current block based on the prediction values for the pixels in the down-sampled prediction grid and the linearly interpolated prediction values for the pixels in the remainder of the prediction grid.

On a condition that a prediction direction is vertical, the device may horizontally interpolate prediction values for pixels in the same rows as the pixels in the down-sampled prediction grid. The device may vertically interpolate prediction values for pixels in the same columns as the pixels in the down-sampled prediction grid and the horizontally interpolated pixels (e.g., pixels whose values have been predicted).

On a condition that a prediction direction is horizontal, the device may vertically interpolate prediction values for pixels in the same columns as the pixels in the down-sampled prediction grid. The device may horizontally interpolate prediction values for pixels in the same rows as the pixels in the down-sampled prediction grid and the vertically interpolated pixels (e.g., pixels whose values have been predicted).

The device may determine an intra prediction angle of the current block. For a given pixel in the pixels in the remainder of the prediction grid, the device may determine, based on the intra prediction angle, a pair of pixels adjacent to the given pixel; and linearly interpolate a prediction value of the given pixel based on the pair of adjacent pixels.

The dimension size may be a first dimension size. On a condition that the current block has a second dimension size less than or equal to the maximum dimension size, the device may set a down-sampling factor for the second dimension size equal to 1.

On a condition that a prediction direction is positive, the device may perform a position dependent prediction compensation (PDPC) on the prediction values for the pixels in the down-sampled prediction grid and the linearly interpolated prediction values for the pixels in the remainder of the prediction grid. The device may decode the current block based on the prediction values for the pixels in the down-sampled prediction grid and the linearly interpolated prediction values for the pixels in the remainder of the prediction grid by decoding the current block based on the prediction values that underwent PDPC.

The device may down-sample the prediction grid based on the dimension size by determining a down-sampling factor based on the dimension size; and down-sampling the prediction grid for the current block based on the down-sampling factor.

The device may down-sample the prediction grid based on the dimension size by calculating down-sampled grid pixel locations $(x_d, y_d)$ as:

$$x_d = r_w * (x + 1) - 1, \text{ for } x = 0, 1, 2, \ldots, L - 1$$

$$y_d = r_h * (y + 1) - 1, \text{ for } y = 0, 1, 2, \ldots, L - 1$$

wherein L is the maximum dimension size, $r_w$ is a down-sampling ratio along an x-axis and is equal to a width of the current block divided by the maximum dimension size, and $r_h$ is a down-sampling ratio along a y-axis and is equal to a height of the current block divided by the maximum dimension size.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows an example of reference samples on the first reference line.
FIG. 5 shows an example interpolation of a predictor sample using the six nearest reference samples.
FIG. 6 shows an example prediction grid for a current block of size 32x32 with a maximum dimension size equal to 16.
FIG. 7 shows an example prediction grid for a current block of size 16x64 with a maximum dimension size equal to 16.
FIG. 8 shows an example of horizontal linear interpolation along rows.
FIG. 9 shows an example vertical linear interpolation along columns.
FIG. 10 shows an example of determining a pair of pixels used for interpolation based on the prediction direction angle.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

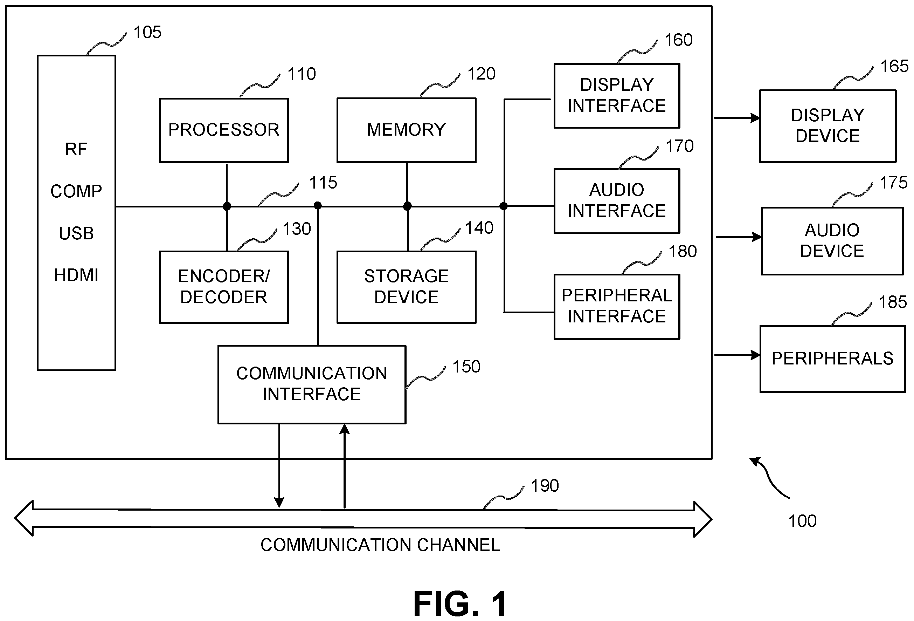

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., over-the-top (OTT) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

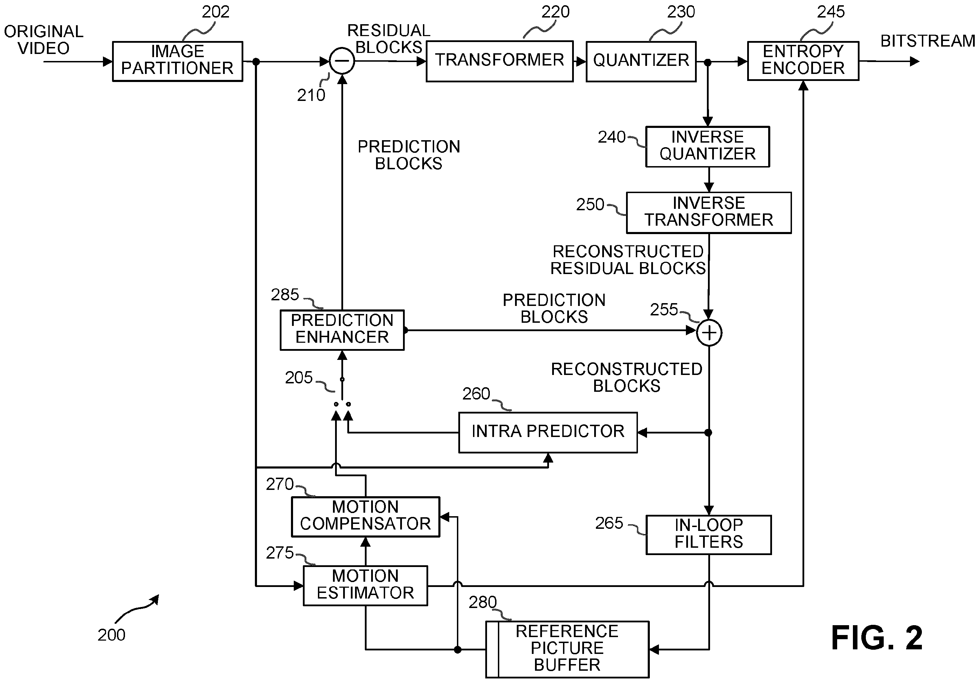

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

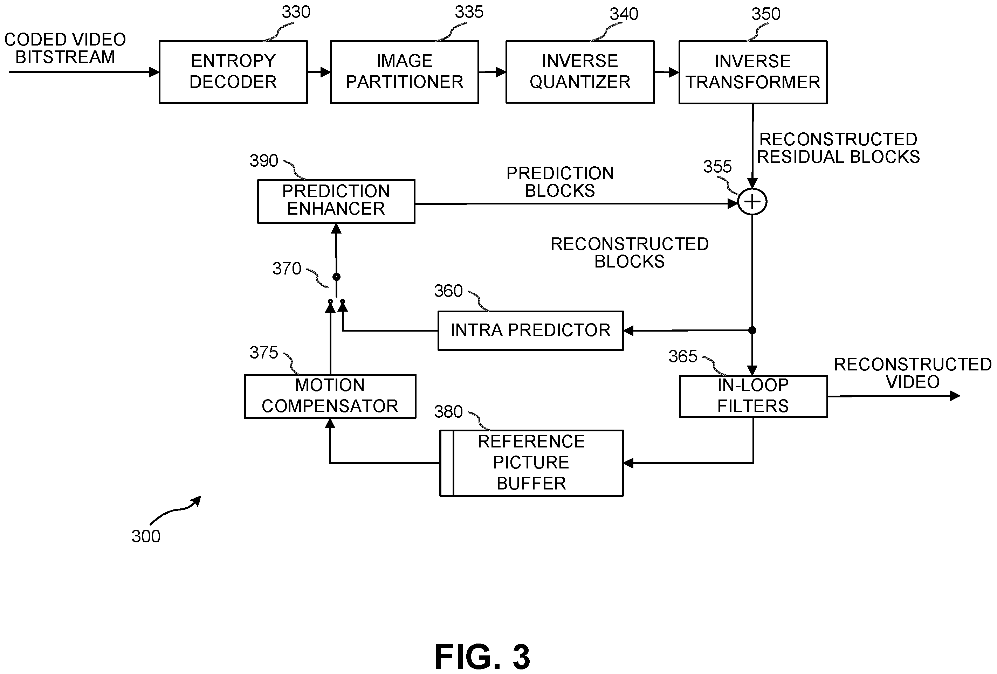

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

In some standards, intra prediction of a current block may involve predicting the block based on the decoded causal neighbor samples. The prediction may be obtained using a (e.g., classical) directional mode. The prediction may be obtained using another prediction mode, such as the template based intra mode derivation (TIMD), the decoder side intra mode derivation (DIMD), the spatial geometric partition mode (SGPM), the intra template matching (IntraTmp), etc. With the variety of modes, the complexities of the encoder and the decoder may be high. Feature(s) described herein may reduce the complexity of prediction (e.g., while maintaining the same prediction quality). For example, a large block may be (e.g., first) predicted at a subsampled pixel grid. The prediction values of the remaining pixels may be (e.g., may then be) linearly interpolated.

Some blocks (e.g., blocks larger than 16x16) may be down-sampled (e.g., to 16x16). The pixel values for the 16x16 block may be predicted. This may reduce the complexity in intra prediction. Using the predicted values, the prediction values of the remaining pixels may be linearly interpolated to obtain the prediction for the original block. The initial prediction may be up-sampled to the original size (e.g., after filtering with an up-sampling filter). The down-sampling ratio may be determined based on the original block size and the down-sampled size (e.g., 16x16). This may achieve the same or a similar level of prediction accuracy with lower computational complexity.

Intra prediction may be applied in intra frames (e.g., all-intra frames) and/or in intra blocks in inter frames (e.g., where a target block, referred to as a coding unit (CU), is spatially predicted from the causal neighbor blocks in the same frame, for example, the blocks on the top and top-right, the blocks on the left and left-bottom, and the top-left block). The encoder may construct different predictions for the target block (e.g., based on the decoded pixel values in these blocks). The encoder may choose the prediction that leads to the best rate-distortion (RD) performance. The predictions may be tested for 67 prediction modes (e.g., including one PLANAR mode (e.g., indexed as mode 0), one DC mode (e.g., indexed as mode 1), and 65 angular modes. The encoder may check for predictions with the DIMD, the TIMD, the SGPM, the IntraTMP, etc. (e.g., in addition to the 67 prediction modes) to arrive at the best prediction for a target block. In DIMD, TIMD, and SGPM the final prediction may be obtained as a weighted sum of predictions with several directional or non-directional modes.

A (e.g., each) prediction may be obtained by predicting the (e.g., all) pixels in a target block (e.g., regardless of whether there is a single prediction or a blending of several predictions). This process may entail considerable complexity (e.g., especially for large block sizes). The prediction for a pixel may be obtained after filtering the reference samples with a four-tap or a six-tap filter for angular modes. The encoder may predict the pixels at a subsampled grid. The prediction values of the remaining target pixels may then be interpolated based on the initial predicted pixel values.

Feature(s) associated with directional intra prediction are provided herein.

Angular prediction modes (e.g., 65 angular prediction modes) may be used for intra prediction of a (e.g., any) target block. The modes may be associated with prediction directions ranging from 45 degrees to -135 degrees (e.g., in a clockwise manner). Some angular modes may be replaced with an equal number of wide angular modes defined beyond the above range. The angular modes may be replaced with wide angular modes based on the block shape. The modes may be referred to as horizontal if they refer to the directions below the diagonal direction (e.g., from top left towards bottom right), and may be referred to as vertical otherwise. The modes may be referred to as positive or negative depending on which side of the (e.g., purely) horizontal (e.g., below or above purely horizontal) or (e.g., purely) vertical (e.g., to the right or left of the purely vertical) direction to which they belong. The directions below and including (e.g., purely) horizontal, and to the right of and including (e.g., purely) vertical may be referred to as positive directions. The remaining directions may be referred to as negative directions.

For a given target block to be intra predicted, the encoder, or the decoder, may construct one or more (e.g., two) reference arrays (e.g., a reference array on the top and a reference array on the left of the target block). The reference samples may be taken from the decoded samples on top, top-right, left, left-bottom, and/or top-left decoded blocks. If some of the samples on the top or the left are not available (e.g., because of the corresponding coding units (CUs) being not in the same slice, or the current CU being at a frame boundary, etc.), reference sample substitution may be performed. In reference sample substitution, the missing samples may be copied from the available samples in a clockwise direction. The reference samples may be filtered with the low-pass filter [1 2 1]/4 (e.g., depending on the block size and the prediction mode). For example, the reference samples may be filtered if the prediction mode is planar and the block size is greater than or equal to 8x8, or if the block size is greater than 4x4 and the prediction mode has integer slope (e.g., the absolute value of the angle parameter *predIntraAngle* is a multiple of 32, so the predictor samples are at integer positions for all target pixels). If the prediction mode does not have integer slope but satisfies the filtering condition, a flag (e.g., *interpolationFlag*) may be enabled. The value of the *interpolationFlag* may determine whether to use a cubic filter or a smoothing filter during the interpolation. If the flag is enabled, a smoothing filter may be used. If the flag is disabled, a cubic filter may be used. For the chroma signals, the reference samples may not be filtered. Predictions based on multiple reference lines (MRL) may be supported. The first reference line may be filtered. For example, the first reference line may or may not be filtered depending on the target block size and the prediction direction. Other reference lines may not be filtered. The prediction with a (e.g., any) reference line other than the first one (e.g., reference lines with an index multiRefIdx > 0) may use a cubic filter for interpolation.

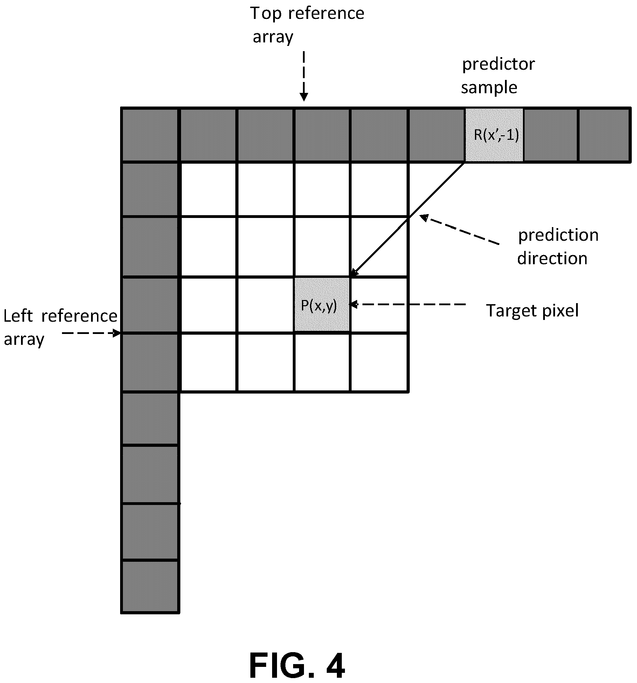

FIG. 4 illustrates example reference samples on the first reference line. For a target block with width W pixels and height H pixels, the top reference array may have 2W+1 samples and the left reference array may have 2H+1 samples.

For a target pixel, the reference sample may be referred to as the target pixel's predictor. If the prediction mode has integer slope, the predictor for a (e.g., every) target pixel may coincide with a reference sample. In this case, the corresponding reference sample may be used as the predictor (e.g., without interpolation filtering). For other angular prediction modes (e.g., all other angular prediction modes), for a Luma signal, the nearest six reference samples of the predictor may be used for interpolating the predictor (e.g., prediction value) as follows:

$P_{pred}(x,y) = (f[0] * P0 + f[1] * P1 + f[2] * P2 + f[3] * P3 + f[4] * P4 + f[5] * P5 + 128) >> 8$

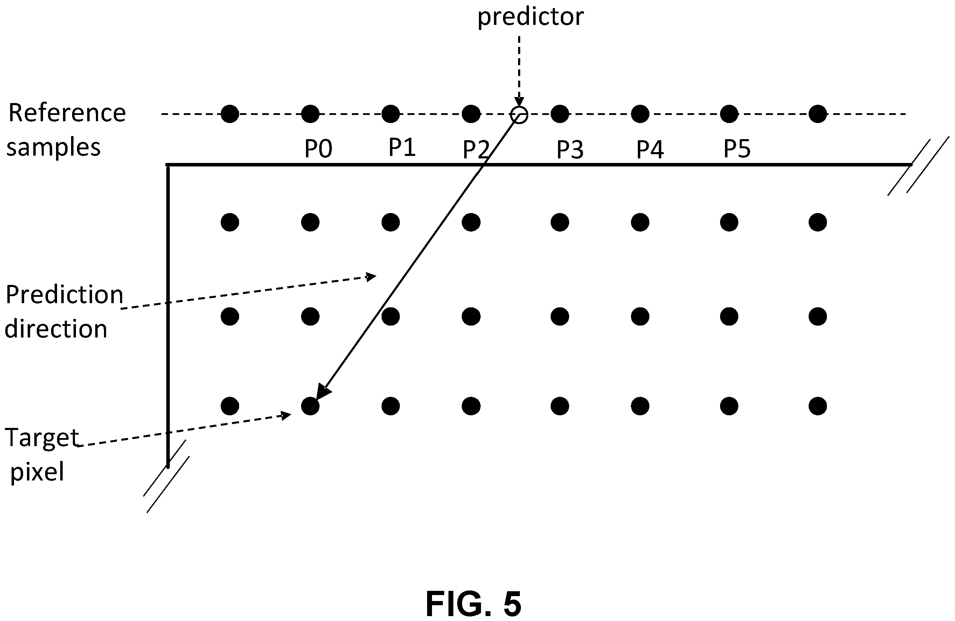

where f[i] denotes the ith filter coefficient and P0-P5 represent the nearest 6 reference samples to the predictor (e.g., as shown in FIG. 5). The filter coefficients f[i], i = 0,1,2,3,4,5 may be normalized with integral values (e.g., so that their sum is equal to 256). The chosen filter may depend on the value of the flag *interpolationFlag*. The value of the interpolation Flag may be decided based on the block size and prediction direction. If *interpolationFlag* is enabled, a smoothing filter may be used) If *interpolationFlag* is disabled, a cubic filter may be used. The specified cubic filter may have both negative and positive coefficient values. In this case, a clipping operation may be performed to keep the predicted value within the valid dynamic range of the Luma component as follows:

$P_{pred}(x,y) = Clip((f[0] * P0 + f[1] * P1 + f[2] * P2 + f[3] * P3 + f[4] * P4 + f[5] * P5 + 128) >> 8)$

FIG. 5 illustrates an example interpolation of a predictor sample (e.g., prediction value) using the six nearest reference samples. The interpolation filter may be a 6-tap cubic filter or smoothing filter (e.g., depending on the value of the flag *interpolationFlag*).

For a chroma target block, the two nearest (e.g., only the two nearest) reference samples P2 and P3 may be used for interpolating the predictor (e.g., prediction value). The predictor value may be linearly interpolated as follows:

$$P_{pred}(x,y) = ((32 - deltaFrac) * P2 + deltaFrac * P3 + 16) >> 5;$$

where, *deltaFrac, deltaFrac* ∈ {0,1,2 ... 31} denotes the distance of the predictor sample from P2.

For positive prediction directions (e.g., including the purely vertical and horizontal directions), the initial prediction values (e.g., obtained as described herein) may be followed by position-dependent prediction compensation (PDPC) to smooth out discontinuities at the block boundaries.

A prediction grid may be sub-sampled. A target block may be predicted at a subsampled grid. The prediction values of the remaining pixels of the target block may be linearly interpolated. This process may be applied to (e.g., only to) blocks having the width and/or the height greater than L, where L >= 16. The down-sampling ratio along the x-axis (row) may be denoted as $r_w$. The down-sampling ratio along the y-axis (column) may be denoted as $r_h$. The down-sampling ratios may be defined as:

$$r_w = W/\text{L}$$

$$r_h = H/L$$

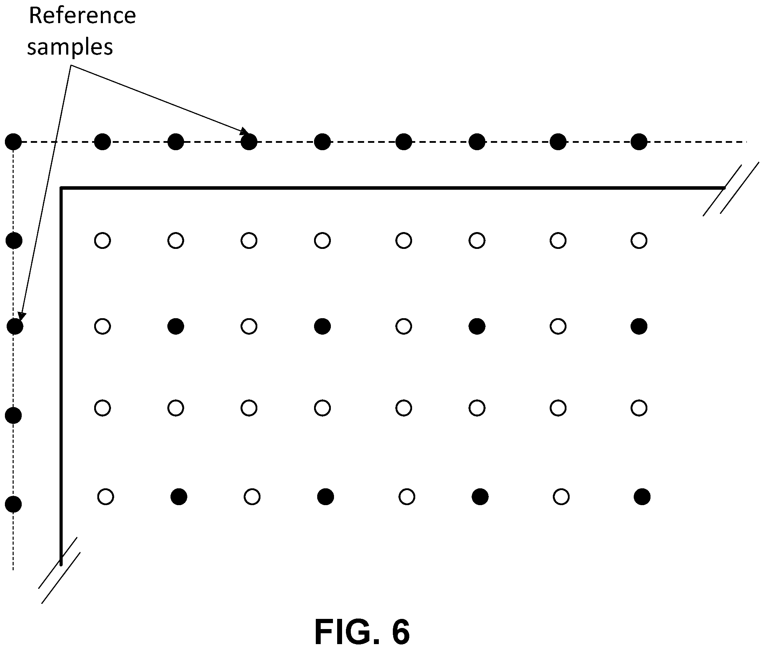

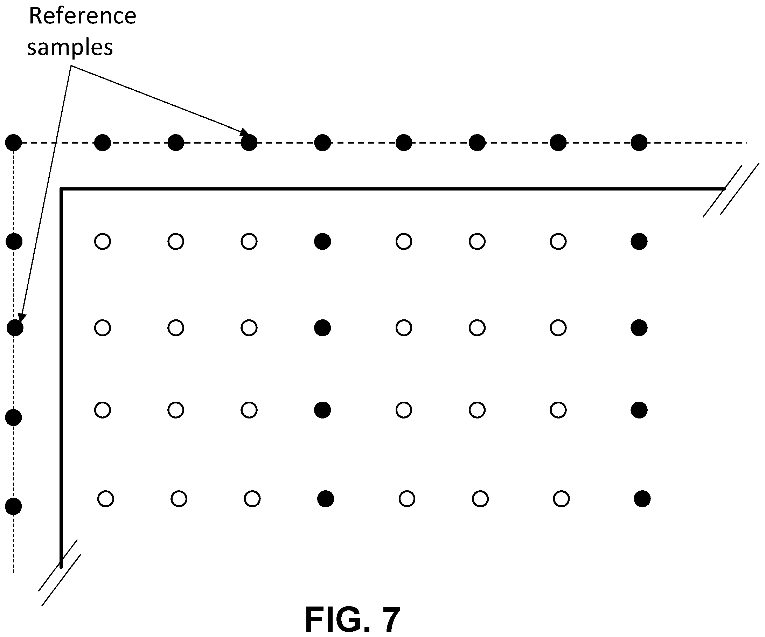

where, W and H denote the width and the height of a target block. The height and width may be dyadic (e.g., they are powers of 2). In this case, $r_w$ and $r_h$ may be dyadic (e.g., $r_w$ and $r_h$ may have values of 1, 2, 4, 8, etc.). The values of $r_w$ and $r_h$ may depend on the block size. If the height or width is less than L, the corresponding down-sampling factor may be set to 1. In this case, down-sampling may not be performed along that dimension. FIG. 6 shows the prediction grid (e.g., down-sampling grid) for a block of size 32x32. FIG. 7 shows the prediction grid (e.g., down-sampling grid) for a block of size 16x64. Mathematically, the down-sampled grid pixel locations ($x_d$, $y_d$) may be expressed as:

$$x_d = r_w * (x + 1) - 1, \text{ for } x = 0,1,2, ..., \text{L} - 1$$

$$y_d = r_h * (y + 1) - 1, \text{ for } y = 0,1,2, ..., \text{L} - 1$$

The grid positions may be selected (e.g., as described herein) so that the prediction values of the remaining pixels can be interpolated using the prediction values at these positions and the reference samples on the top and left. The prediction method described herein may be applied if (e.g., only if) the reference line index is zero (e.g., multiRefIdx = 0). The prediction method described herein may be applied with a (e.g., any) reference line. Some implementations (e.g., less complex implementation) of the interpolation operation, method to be applied (e.g., restricted to) the situation in which multiRefIdx is equal to zero.

The intra prediction may be performed as follows. Target pixels (e.g., only the target pixels) at the down sampled grid positions ($x_d$, $y_d$) may be predicted (e.g., in the normal manner as described herein). The prediction values of the remaining target pixels may be linearly interpolated using the prediction values at ($x_d$, $y_d$) and the reference samples.

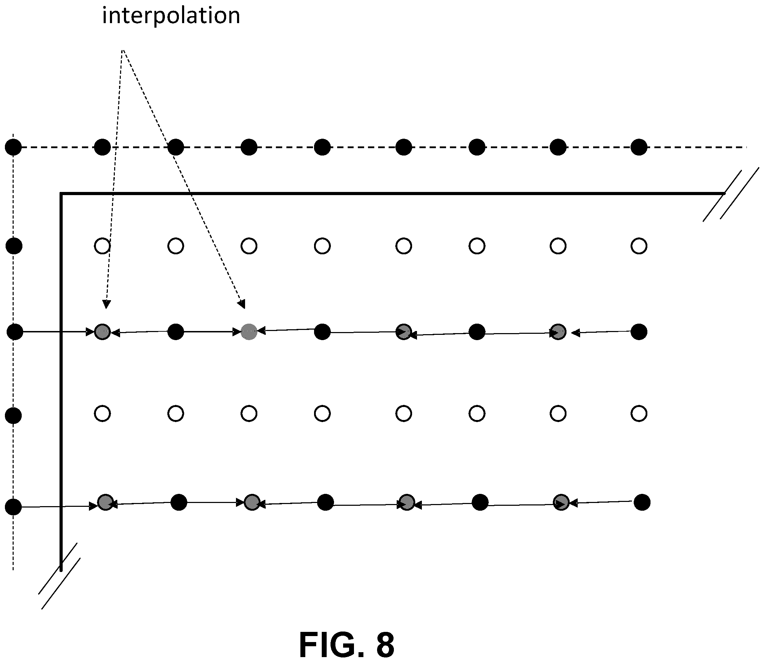

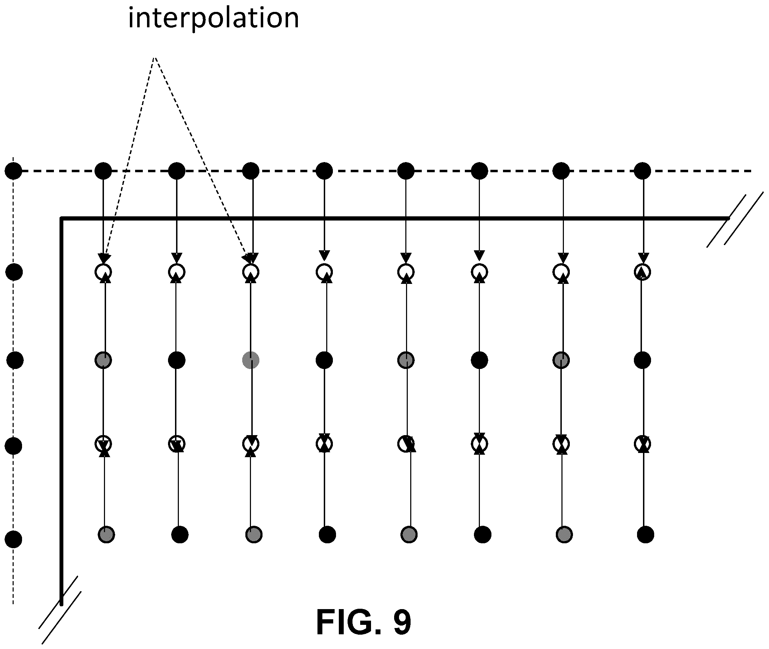

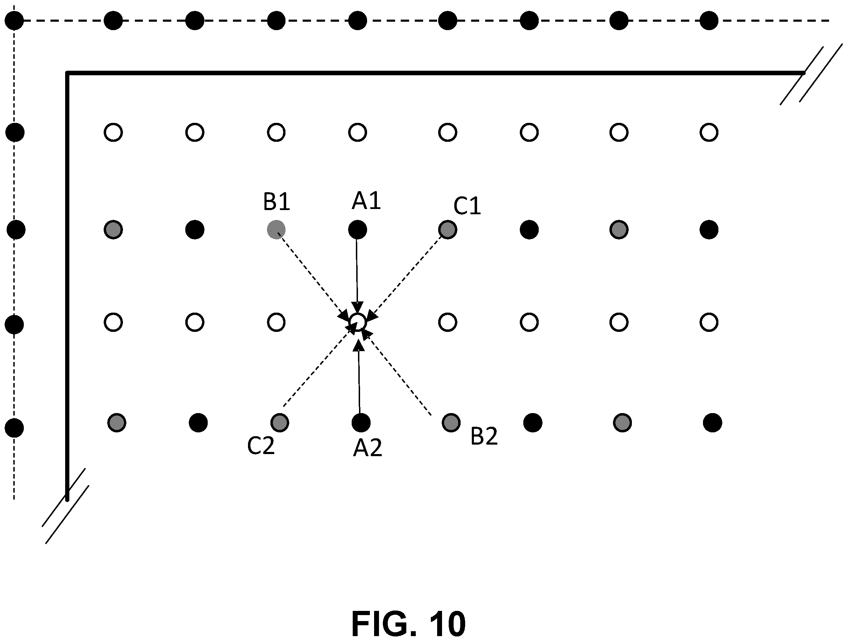

FIG. 8 illustrates example horizontal linear interpolations along rows. In this example, the prediction direction may be vertical. FIG. 9 illustrates example vertical linear interpolations along columns. In this example, the prediction direction may be vertical. FIG. 10 illustrates an example pair of pixels used for interpolation. The pair of pixels may be determined based on the prediction direction angle.

The interpolation step may be performed as follows. If the prediction direction is vertical, the missing prediction values of the pixels on the rows may be interpolated (e.g., as shown in FIG. 8). In this case, the predicted samples on a row may be used to interpolate the intermediate pixel values. The prediction values of the remaining pixels may be interpolated vertically using the already predicted pixels (e.g., as shown in FIG. 9). In this case, a pair of pixels values may be used to interpolate the prediction values of the intermediate pixels. The pair of pixels used to interpolate the pixels on a column may be chosen according to the direction of prediction. For example, considering a 32x32 block, if the *predIntraAngle* value is between -16 and 16 (with 1/32 angle resolution), the vertical pair of pixels (e.g., pixels A1 and A2, in FIG. 10) may be used. If the *predIntraAngle* value is less than -16, the diagonal pair of pixels (e.g., pixels B1 and B2 in FIG. 10) may be used. Otherwise (e.g., *predIntraAngle* value is greater than 16), the other diagonal pair (e.g., C1 and C2 in FIG. 10) may be used.

If the down sampling ratio in the vertical direction is greater than two, the pair of pixels used for interpolation of the prediction values of the pixels on a column may be chosen in likewise fashion.

If the prediction direction is horizontal, the interpolation process may be analogous. For example, the prediction values of the pixels along a column may be interpolated using already predicted pixel values on the same column. The prediction values of the remaining pixels may be interpolated along rows using the nearest pair of pixel values (e.g., located either on the same rows or diagonally relative to the target pixel location depending on the angle parameter value *predInraAngle* associated with the prediction direction).

The prediction values for all pixels may undergo PDPC if the prediction direction is positive.

As an interpolation process may lead to smoothing of sharp features, this prediction method may be used if the parameter *InterpolationFlag* is enabled (e.g., when the reference samples are filtered with a smoothing filter). With large block sizes, the reference samples may be filtered with smoothing filters for some prediction directions (e.g., all prediction directions except the purely vertical and purely horizontal directions). The techniques described herein may lead to considerable savings in complexity (e.g., because the interpolation step requires a maximum of only one multiplication for each pixel prediction value to be interpolated).

Feature(s) described herein may apply to Luma blocks (e.g., only Luma blocks). The chroma blocks may be predicted in another manner (e.g., the usual manner). Predictions for the (e.g., all) intra directional modes (e.g., except the purely vertical and purely horizontal modes) may be obtained (e.g., as described herein) for a current block with size greater than 16x16. The prediction method may apply to the (e.g., all) intra prediction tools involving directional modes (e.g., except intra sub-partitions (ISP)). For example, the prediction method may apply for standalone directional modes and the directional modes in TIMD, DIMD, the template based MRL (TMRL), SGPM, etc. In the case of intra prediction with sub-partitions (ISP), as the sub-partitions are of small size, the full prediction grid may be used for predicting a sub-partition.

The prediction method may be applied for (e.g., only for) a subset of directional modes (e.g., the wide angles, angles greater than a threshold value, etc.).

The prediction method may be applied for directional modes used in TIMD, DIMD, TMRL, SGPM, etc. (e.g., where several predictions may be blended to obtain the final prediction). For a standalone directional prediction, the method using the full prediction grid may be used.

The reference arrays for prediction may be filtered with a smoothing filter. If the reference arrays are filtered with a cubic filter, the method using the full prediction grid may be used.

The encoder may perform the prediction as described herein. The encoder may indicate the prediction method used by encoding a bit (e.g., in the slice or picture or sequence parameter set, depending on whether the prediction method is applied in a slice, frame, or sequence, respectively).

Feature(s) described herein relate to an intra prediction model based on sub-sampling of the prediction grid. This may reduce the complexity of prediction (e.g., while maintaining similar prediction accuracy as with the full prediction grid, for example, in the cases where multiple predictions are blended to obtain the final prediction). The interpolations may be performed using linear interpolations. The linear interpolations may be implemented in hardware (e.g., efficiently).

Systems, methods, and instrumentalities are disclosed for intra prediction with subsampling of a prediction grid. Any of the feature(s) described herein may be used alone or in combination with other feature(s) described. An example device may determine that a current block has a dimension size larger than a maximum dimension size. Based on the determination, the device may down-sample a prediction grid based on the dimension size. The device may determine prediction values for pixels in the down-sampled prediction grid. Based on the prediction values for the pixels in the down-sampled prediction grid, the device may linearly interpolate prediction values for pixels in a remainder of the prediction grid. The device may decode the current block based on the prediction values for the pixels in the down-sampled prediction grid and the linearly interpolated prediction values for the pixels in the remainder of the prediction grid.

On a condition that a prediction direction is vertical, the device may horizontally interpolate prediction values for pixels in the same rows as the pixels in the down-sampled prediction grid. The device may vertically interpolate prediction values for pixels in the same columns as the pixels in the down-sampled prediction grid and the horizontally interpolated pixels (e.g., pixels whose values have been predicted).

On a condition that a prediction direction is horizontal, the device may vertically interpolate prediction values for pixels in the same columns as the pixels in the down-sampled prediction grid. The device may horizontally interpolate prediction values for pixels in the same rows as the pixels in the down-sampled prediction grid and the vertically interpolated pixels (e.g., pixels whose values have been predicted).

The device may determine an intra prediction angle of the current block. For a given pixel in the pixels in the remainder of the prediction grid, the device may determine, based on the intra prediction angle, a pair of pixels adjacent to the given pixel; and linearly interpolate a prediction value of the given pixel based on the pair of adjacent pixels.

The dimension size may be a first dimension size. On a condition that the current block has a second dimension size less than or equal to the maximum dimension size, the device may set a down-sampling factor for the second dimension size equal to 1.

On a condition that a prediction direction is positive, the device may perform a position dependent prediction compensation (PDPC) on the prediction values for the pixels in the down-sampled prediction grid and the linearly interpolated prediction values for the pixels in the remainder of the prediction grid. The device may decode the current block based on the prediction values for the pixels in the down-sampled prediction grid and the linearly interpolated prediction values for the pixels in the remainder of the prediction grid by decoding the current block based on the prediction values that underwent PDPC.

The device may down-sample the prediction grid based on the dimension size by determining a down-sampling factor based on the dimension size; and down-sampling the prediction grid for the current block based on the down-sampling factor.

The device may down-sample the prediction grid based on the dimension size by calculating down-sampled grid pixel locations $(x_d, y_d)$ as:

$$x_d = r_w * (x + 1) - 1, \text{ for } x = 0, 1, 2, \ldots, L - 1$$

$$y_d = r_h * (y + 1) - 1, \text{ for } y = 0, 1, 2, \ldots, L - 1$$

wherein L is the maximum dimension size, $r_w$ is a down-sampling ratio along an x-axis and is equal to a width of the current block divided by the maximum dimension size, and $r_h$ is a down-sampling ratio along a y-axis and is equal to a height of the current block divided by the maximum dimension size.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. HTTP live Streaming (HLS) manifest transmitted over HTTP.

iii. DASH MPD descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.  A device comprising:
    a processor configured to:

    determine that a current block has a dimension size larger than a maximum dimension size;
    based on the determination, down-sample a prediction grid based on the dimension size;
    determine prediction values for pixels in the down-sampled prediction grid;
    based on the prediction values for the pixels in the down-sampled prediction grid, linearly interpolate prediction values for pixels in a remainder of the prediction grid; and
    decode the current block based on the prediction values for the pixels in the down-sampled prediction grid and the linearly interpolated prediction values for the pixels in the remainder of the prediction grid.

2.  The device of claim 1, wherein the processor being configured to linearly interpolate the prediction values for the pixels in the remainder of the prediction grid comprises the processor being configured to:
    on a condition that a prediction direction is vertical:

    horizontally interpolate prediction values for pixels in the same rows as the pixels in the down-sampled prediction grid; and
    vertically interpolate prediction values for pixels in the same columns as the pixels in the down-sampled prediction grid and the horizontally interpolated pixels.

3.  The device of claim 1 or 2, wherein the processor being configured to linearly interpolate the prediction values for the pixels in the remainder of the prediction grid comprises the processor being configured to:
    on a condition that a prediction direction is horizontal:

    vertically interpolate prediction values for pixels in the same columns as the pixels in the down-sampled prediction grid; and
    horizontally interpolate prediction values for pixels in the same rows as the pixels in the down-sampled prediction grid and the vertically interpolated pixels.

4.  The device of any one of claims 1-3, wherein the processor being configured to linearly interpolate the prediction values for the pixels in the remainder of the prediction grid comprises the processor being configured to:

    determine an intra prediction angle of the current block; and
    for a given pixel in the pixels in the remainder of the prediction grid:

    determine, based on the intra prediction angle, a pair of pixels adjacent to the given pixel; and
    linearly interpolate a prediction value of the given pixel based on the pair of adjacent pixels.

5. The device of any one of claims 1-4, wherein the dimension size is a first dimension size, and the processor is further configured to, on a condition that the current block has a second dimension size less than or equal to the maximum dimension size, set a down-sampling factor for the second dimension size equal to 1.

6. The device of any one of claims 1-5, wherein, on a condition that a prediction direction is positive, the processor is further configured to perform a position dependent prediction compensation (PDPC) on the prediction values for the pixels in the down-sampled prediction grid and the linearly interpolated prediction values for the pixels in the remainder of the prediction grid, wherein the processor being configured to decode the current block based on the prediction values for the pixels in the down-sampled prediction grid and the linearly interpolated prediction values for the pixels in the remainder of the prediction grid comprises the processor being configured to decode the current block based on the prediction values that underwent PDPC.

7. The device of any one of claims 1-6, wherein the processor being configured to down-sample the prediction grid based on the dimension size comprises the processor being configured to:

   determine a down-sampling factor based on the dimension size; and
   down-sample the prediction grid for the current block based on the down-sampling factor.

8. The device of any one of claims 1-7, wherein the processor being configured to down-sample the prediction grid based on the dimension size comprises the processor being configured to calculate down-sampled grid pixel locations ($x_d$, $y_d$) as:

$$x_d = r_w * (x + 1) - 1, \text{ for } x = 0, 1, 2, ..., L - 1$$

$$y_d = r_h * (y + 1) - 1, \text{ for } y = 0, 1, 2, ..., L - 1$$

   wherein L is the maximum dimension size, $r_w$ is a down-sampling ratio along an x-axis and is equal to a width of the current block divided by the maximum dimension size, and $r_h$ is a down-sampling ratio along a y-axis and is equal to a height of the current block divided by the maximum dimension size.

9. A method comprising:

   determining that a current block has a dimension size larger than a maximum dimension size;
   based on the determination, down-sampling a prediction grid based on the dimension size;
   determining prediction values for pixels in the down-sampled prediction grid;
   based on the prediction values for the pixels in the down-sampled prediction grid, linearly interpolating prediction values for pixels in a remainder of the prediction grid; and
   decoding the current block based on the prediction values for the pixels in the down-sampled prediction grid and the linearly interpolated prediction values for the pixels in the remainder of the prediction grid.

10. The method of claim 9, wherein linearly interpolating the prediction values for the pixels in the remainder of the prediction grid comprises:
   on a condition that a prediction direction is vertical:

   horizontally interpolating prediction values for pixels in the same rows as the pixels in the down-sampled prediction grid; and
   vertically interpolating prediction values for pixels in the same columns as the pixels in the down-sampled prediction grid and the horizontally interpolated pixels.

11. The method of claim 9 or 10, wherein linearly interpolating the prediction values for the pixels in the remainder of the prediction grid comprises:
   on a condition that a prediction direction is horizontal:

   vertically interpolating prediction values for pixels in the same columns as the pixels in the down-sampled prediction grid; and
   horizontally interpolating prediction values for pixels in the same rows as the pixels in the down-sampled prediction grid and the vertically interpolated pixels.

12. The method of any one of claims 9-11, wherein linearly interpolating the prediction values for the pixels in the remainder of the prediction grid comprises:

    determining an intra prediction angle of the current block; and
    for a given pixel in the pixels in the remainder of the prediction grid:

        determining, based on the intra prediction angle, a pair of pixels adjacent to the given pixel; and
        linearly interpolating a prediction value of the given pixel based on the pair of adjacent pixels.

13. The method of any one of claims 9-12, wherein the dimension size is a first dimension size, and the method further comprises, on a condition that the current block has a second dimension size less than or equal to the maximum dimension size, set a down-sampling factor for the second dimension size equal to 1.

14. The method of any one of claims 9-13, wherein, on a condition that a prediction direction is positive, the method further comprises performing a position dependent prediction compensation (PDPC) on the prediction values for the pixels in the down-sampled prediction grid and the linearly interpolated prediction values for the pixels in the remainder of the prediction grid, wherein decoding the current block based on the prediction values for the pixels in the down-sampled prediction grid and the linearly interpolated prediction values for the pixels in the remainder of the prediction grid comprises decoding the current block based on the prediction values that underwent PDPC.

15. The method of any one of claims 9-14, wherein down-sampling the prediction grid based on the dimension size comprises:

    determining a down-sampling factor based on the dimension size; and
    down-sampling the prediction grid for the current block based on the down-sampling factor.

**FIG. 1**

EP 4 730 769 A1

FIG. 2

FIG. 3

Top reference
array

predictor
sample

R(x′,-1)

prediction
direction

P(x,y)

Left reference
array

Target pixel

EP 4 730 769 A1

# FIG. 4

FIG. 5

FIG. 6

Reference
samples

FIG. 7

EP 4 730 769 A1

interpolation

FIG. 8

FIG. 9

**FIG. 10**

**EUROPEAN SEARCH REPORT**

Application Number

EP 24 30 6751

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/095387 A1 (DUMAS THIERRY [FR] ET AL) 30 March 2023 (2023-03-30) <br> * abstract * <br> * paragraphs [0045] - [0046], [0077], [0079], [0100], [0103], [0106], [0124] - [0125], [0134] - [0136] * <br> * claims 24, 26 * <br> * figure 25A * | 1-15 | INV. <br> H04N19/105 <br> H04N19/11 <br> H04N19/117 <br> H04N19/159 <br> H04N19/167 <br> H04N19/176 <br> H04N19/182 <br> H04N19/59 |
| A | US 2020/252640 A1 (ZHAO LIANG [US] ET AL) 6 August 2020 (2020-08-06) <br> * the whole document * | 1-15 | H04N19/593 |
| A | US 2016/063676 A1 (DONOVAN WALTER E [US]) 3 March 2016 (2016-03-03) <br> * abstract * <br> * paragraphs [0013], [0164], [0166] * | 1-15 | |

**TECHNICAL FIELDS SEARCHED (IPC)**

H04N

The present search report has been drawn up for all claims

| Place of search | Date of completion of the search | Examiner |
|---|---|---|
| Munich | 27 February 2025 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 730 769 A1**

## ANNEX TO THE EUROPEAN SEARCH REPORT
## ON EUROPEAN PATENT APPLICATION NO.

EP 24 30 6751

27-02-2025

| Patent document cited in search report | | Publication date | Patent family member(s) | | Publication date |
|---|---|---|---|---|---|
| US 2023095387 | A1 | 30-03-2023 | CN | 115104301 A | 23-09-2022 |
| | | | EP | 4107945 A1 | 28-12-2022 |
| | | | KR | 20220137964 A | 12-10-2022 |
| | | | US | 2023095387 A1 | 30-03-2023 |
| | | | WO | 2021165018 A1 | 26-08-2021 |
| US 2020252640 | A1 | 06-08-2020 | CN | 113366847 A | 07-09-2021 |
| | | | CN | 115002477 A | 02-09-2022 |
| | | | EP | 3769520 A1 | 27-01-2021 |
| | | | JP | 7337929 B2 | 04-09-2023 |
| | | | JP | 2022512088 A | 02-02-2022 |
| | | | JP | 2023164443 A | 10-11-2023 |
| | | | KR | 20210094058 A | 28-07-2021 |
| | | | US | 2020252640 A1 | 06-08-2020 |
| | | | US | 2022239940 A1 | 28-07-2022 |
| | | | WO | 2020160428 A1 | 06-08-2020 |
| US 2016063676 | A1 | 03-03-2016 | CN | 105389776 A | 09-03-2016 |
| | | | DE | 102015114651 A1 | 10-03-2016 |
| | | | TW | 201624414 A | 01-07-2016 |
| | | | US | 2016063676 A1 | 03-03-2016 |

EPO FORM P0459

For more details about this annex : see Official Journal of the European Patent Office, No. 12/82